# EUROPÄISCHE PATENTSCHRIFT

(11) **EP 0 443 022 B1**
(45) Veröffentlichungstag und Bekanntmachung des Hinweises auf die Patenterteilung: **15.11.1995**
(21) Anmeldenummer: 90915109.4
(22) Anmeldetag: 06.09.1990
(51) Int. Cl.: B60N 2/52

(54) **FAHRZEUGSITZ**
CAR SEAT
SIEGE DE VEHICULE

(30) Priorität: 13.09.1989 DE 3930612
(43) Veröffentlichungstag der Anmeldung: 28.08.1991
(73) Patentinhaber: Gebr. Isringhausen GmbH & Co. KG, 32657 Lemgo (DE)
(72) Erfinder: PIETSCH, Helge, D-4930 Detmold (DE)
(74) Vertreter: Lange, Gerd, Dipl.-Ing.
(86) Internationale Anmeldenummer: EP9001491
(87) Internationale Veröffentlichungsnummer: WO9104168

(56) Entgegenhaltungen:
- EP-A- 0 002 332
- DE-B- 2 736 242
- DE-C- 3 312 732

## Beschreibung

Die Erfindung betrifft einen Fahrzeugsitz mit einem mechanischen Schwingsystem, das mittels einer Luftfeder abgefedert ist, und mit einer elektronischen Steuerung, die in Abhängigkeit von den Schwinghüben des Schwingsystems Luftventile zum Belüften oder Entlüften der Luftfeder steuert.

Elektronische Steuerungen für Luftsitze sind beispielsweise aus der DE-AS 27 36 242 und aus der DE-PS 33 12 732 bekannt. Sie sind jeweils für ganz bestimmte Steuerfunktionen ausgelegt und erzeugen für diesen Zweck Ausgangssignale z. B. zum Schalten eines Stellmotors oder zum überwachen der Soll-Mittellage eines Luftsitzes durch Belüften oder Entlüften der Luftfeder. Derartige Steuerungen arbeiten in Abhängigkeit von den Schwinghüben des Schwingsystems, indem üblicherweise zwei oder mehrere Meßfühler bestimmte Positionen, die vom Schwingsysteme überfahren werden, sensieren, d.h. als Eingangssignale an die elektronische Steuerung geben.

Auch ist es aus der EP 0 002 332 A1 bekannt, anstelle der vorgenannten diskreten Meßfühler Drehpotentiometer zu verwenden, die in Abhängigkeit von den Schwinghüben des Schwingsystems betätigt werden und dadurch bestimmte Schwinghub-Positionen des Sitzes oberhalb oder unterhalb der Soll-Mittellage anzeigen.

In der Praxis erfordern derartige Steuerungen das genaue Justieren der Meßfühler oder der Drehpotentiometer, wobei die jeweiligen Montagepositionen am Schwingsystem sehr unterschiedlich sein können, je nachdem welcher Sitztyp bzw. Schwingsystemtyp verwendet wird und/oder welche Steuerfunktion mit der elektronischen Steuerung ausgeführt werden soll. Sollen mehrere Steuerfunktionen realisiert werden, wie z.B. Schalten der Luftventile zum Belüften und Entlüften der Luftfeder und/oder das Verändern der Soll-Mittellage des Sitzes etc, dann sind am Schwingsystem entsprechend viele Meßfühler oder Potentiometer montiert.

Aufgabe der Erfindung ist es, einen luftgefederten Fahrzeugsitz mit einer elektronischen Steuerung zu schaffen, die einfach zu montieren ist und die es ermöglicht, mehrere Steuerfunktionen problemlos zu realisieren und/oder zu verändern.

Diese Aufgabe wird erfindungsgemäß dadurch gelöst, daß das Schwingsystem einen Schwinghub-Sensor aufweist, der während des Betriebszustandes des Sitzes permanent eine ununterbrochene Folge von elektrischen Signalen abgibt, die ein genaues weganaloges und zeitgleiches elektrisches Abbild der Schwingungen des Schwingsystems darstellen, und daß das elektrische Schwingungsabbild an einem Eingang eines Mikroprozessors anliegt, der in ständig wiederkehrenden Programmabläufen das Schwingungsabbild mit voreingestellten Ereignis-Sollwerten vergleicht und im Falle von Abweichungen ein oder mehrere Ausgangssignale erzeugt, die zumindest die Luftventile zum Belüften und Entlüften der Luftfeder steuern.

Nach der Lehre der Erfindung gilt, daß ein einziger am Schwingsystem montierter Sensor ausreicht, um alle Anforderungen einer elektronischen Sitzsteuerung zu erfüllen. Voraussetzung ist jedoch, daß dieser einzige Schwinghub-Sensor permanent eine ununterbrochene Folge von elektrischen Signalen abgibt, die ein genaues weganaloges und zeitgleiches elektrisches Abbild der IST-Schwingungen des Schwingsystems darstellen.

Die vom Schwinghub-Sensor gebildeten Signalfolgen können als digitale Wertefolgen oder als elektrische Analogsignale vorliegen. Letztere werden bevorzugt mittels eines Potentiometers generiert, können aber alternativ auch z. B. mittels eines induktiven Wegaufnehmers oder einem opto-elektronischen Gebersystem erzeugt werden, wie sie heute handelsüblich sind.

Das erzeugte elektrische Schwingungsabbild des Schwingsystems ist nach der Lehre der Erfindung an den Eingang eines Mikroprozessors gelegt. Dabei ist von Vorteil, daß einerseits der Prozessor irgendwo am Sitz oder remote vom Sitz angeordnet sein kann und nicht den beengten Raum innerhalb des Schwingsystems belegt, andererseits aber dennoch ein vollständiges und zeitgleiches elektrisches Schwingungsabbild des Schwingsystems an seinem Eingang zur Verfügung hat.

An diesem elektrischen Schwingungsabbild kann der Prozessor entsprechend seinem Arbeitszyklus, d. h. in ständig wiederkehrenden Programmabläufen bestimmte Schwingungs-Istwerte durch Vergleich mit voreingestellten Ereignis-Sollwerten abfragen, wobei gemäß einer besonderen Ausführungsform der Erfindung die voreingestellten bzw. voreinstellbaren Ereignis-Sollwerte veränderbar sind. Das ist ein wesentlicher Vorteil, denn nunmehr können beliebig viele
Ereignis-Istwerte der Schwingungen des Schwingsystems erfaßt werden, ohne daß es zu diesem Zweck der mechanischen Anordnung oder mechanischen Veränderung sowie der Justierung einzelner Meßfühler am Schwingsystem bedarf. Das Schwingsystem bleibt frei von einer vielfachen Anordnung einzelner Meßfühler, wie dies bisher bei elektronischen Steuerungen für die Erfassung diverser unterscheidbarer Eingangssignale bekannt war. Entsprechend einfach und problemlos ist die erfindungsgemäße Sitzsteuerung dem jeweiligen Sitztyp bzw. dem jeweiligen Schwingungssystem anzupassen.

Ebenso ist es von Vorteil, zur Anpassung der Steuerung an den jeweiligen Sitztyp bzw. zur Generierung bestimmter Ausgangssignale die schaltungstechnische Verarbeitung der aus dem elektrischen Schwingungsabbild abgefragten Ereignis-Istwerte innerhalb des Prozessors verändern zu können, wie dies mittels speicherprogrammierbarer Prozessoren realisierbar ist.

Im modernen Sitzbau ist es bekannt, das Schwingungsverhalten des Sitzes nicht nur durch Belüften oder Entlüften der Luftfeder zu verändern, sondern zu diesem Zweck auch ein sogenanntes Zusatzluftvolumen dem Luftsystem hinzuzufügen oder von diesem wieder abzuschalten. Ebenso ist es bekannt, einen Zusatzstoßdämpfer zu- oder abzuschalten, um die Schwingungen des Sitzes im Bedarfsfall stärker zu dämpfen. Der Aufwand für die Steuerung derartiger Zusatzelemente war bisher jedoch entsprechend hoch. Nunmehr wird mit dem Unteranspruch 6 aufgezeigt, wie einfach nach der erfindungsgemäßen Lehre derartige Zusatzelemente angesteuert werden können.

Die Unteransprüche 7 und 8 zeigen zweckmäßige Ausführungsformen der Erfindung zum Steuern regelbarer Stoßdämpfer.

Nachfolgend wird ein Ausführungsbeispiel der Erfindung anhand der Zeichnung näher erläutert.
Es zeigt:

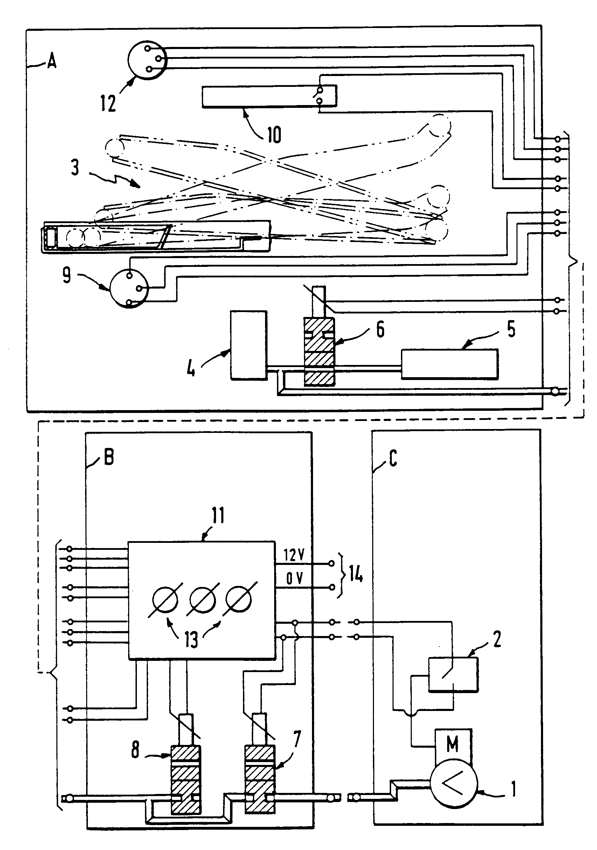

- Fig. 1: den steuerungstechnischen Aufbau eines luftgefederten Fahrzeugsitzes nach der Lehre der Erfindung.

Dargestellt sind als Baueinheiten eine Sitzeinheit A, ein Steuermodul B und ein Kompressorteil C.

Es handelt sich um einen luftgefederten Sitz, der für seine Luftdruckversorgung einen eigenen Kompressor 1 im Kompressorteil C besitzt, der über ein Relais 2 ein- und auszuschalten ist. Das Schwingsystem des Sitzes ist symbolisch innerhalb der Sitzeinheit A dargestellt und zwar in Form eines strichpunktiert gezeichneten Scherenlenker-Schwingsystems 3, wie es für sich betrachtet hinreichend bekannt ist. Die bei einer konkreten Ausführung in das Schwingsystem eingebaute Luftfeder 4 ist zur besseren Verdeutlichung symbolisch unter dem Schwingsystem dargestellt.

Der Sitz ist weiterhin ausgestattet mit einem Zusatzluftvolumen 5, das mittels des elektromagnetisch zu betätigenden Ventils 6 zu dem Luftvolumen der Luftfeder 4 zugeschaltet oder davon wieder abgeschaltet werden kann.

Die Luftfeder selbst wird über das Belüftungsventil 7 und das Entlüfungsventil 8 belüftet bzw. entlüftet. Das Belüftungsventil 7 wird zusammen mit dem Relais 2 zum Steuern des Kompressors 1 geschaltet.

Gemäß der Erfindung besitzt das Schwingsystem einen Schwinghub-Sensor in Form eines Potentiometers 9, das in einfachster Weise zwischen zwei sich relativ zueinander bewegende Teile des Scherenlenker-Schwingsystems 3 montiert sein kann, so daß ein genaues weganaloges und zeitgleiches elektrisches Abbild der Schwinghübe des Schwingsystems entsteht.

Nimmt ein Fahrer auf dem Fahrzeugsitz Platz, dann wird zunächst mittels eines Sitzkontaktschalters 10 der im Steuermodul C vorhandene Prozessor aktiviert.

Der Betriebszustand ist angezeigt. Während des Betriebszustandes liegt permanent das mittels des Potentiometers 9 sensierte weganaloge elektrische Schwingungsabbild des Schwingsystems an einem Eingang des Prozessors 11 an. Hierdurch ist der Prozessor in der Lage, in ständig wiederkehrenden Programmabläufen das elektrische Schwingungsabbild mit voreingestellten Sollwerten zu vergleichen.

Zunächst, d. h. unmittelbar nach der Aktivierung der Steuerung, wird die statische Soll-Mittellage des Sitzes abgefragt. Diese kann über das am Sitz gut erreichbar montierte Potentiometer 12 voreingestellt werden. Bei der anfänglich zu erwartenden Abweichung erzeugt der Prozessor 11 ein Ausgangssignal zum Einschalten des Kompressors 1 und zum gleichzeitigen Öffnen des Belüftungsventils 7. Der Sitz fährt dann in seine statische Soll-Mittellage.

Weitere Voreinstellungen für Ereignis-Sollwerte sind im Steuermodul B mittels der dort vorhandenen Potentiometer 13 vorzunehmen. Beispielsweise können dies bestimmte Sollwertvorgaben nahe unterhalb der Mittellage des Sitzes sein, um den Kompressor nach dem anfänglichen Hochfahren des Sitzes wieder abzuschalten und das Belüftungsventil 7 wieder zu schließen.

Andere Sollwertvorgaben, die mittels der Potentiometer 13 einstellbar sind, dienen dazu, um im Betriebszustand das Schwingverhalten des Sitzes zu überwachen und bei Abweichungen mittels des Prozessors 11 Ausgangsignale zu erzeugen die das Entlüftungsventil 8 sowie das Belüftungsventil 7 der Luftfeder und/oder das Ventil 6 für das Zu- oder Abschalten des Zusatzluftvolumens 5 steuern.

Der Variabilität im Setzen der Sollwertvorgaben und/oder dem Verändern der schaltungstechnischen Verarbeitung der am elektrischen Schwingungsabbild vergleichend abgefragten Ereignis-Istwerte sind bei dem heute bereits erreichten Stand der Mikroprozessorentechnik kaum Grenzen gesetzt.

## Patentansprüche

1. Fahrzeugsitz
mit einem mechanischen Schwingsystem, das mittels einer Luftfeder (4) abgefedert ist, wobei das Schwingsystem einen Schwinghub-Sensor (9) aufweist, der während des Betriebszustandes des Sitzes permanent eine ununterbrochene Folge von elektrischen Signalen abgibt, wobei diese elektrischen Signale an dem Eingang einer elektronischen Steuerung (B) anliegen, die im Falle von Abweichungen von voreingestellten Ereignis-Sollwerten ein oder mehrere Ausgangssignale erzeugt, die die Luftventile (7,8) zum Belüften und Entlüften der Luftfeder (4) steuern,
dadurch gekennzeichnet,
daß die elektrischen Signale des Schwinghub-Sensors (9) ein genaues weganaloges und zeitgleiches elektrisches Abbild der Schwingungen des Schwingsystems darstellen
und daß das elektrische Schwingungsabbild an einem Eingang eines Mikroprozessors (11) anliegt, in dem die voreingestellten Ereignis-Sollwerte gespeichert sind und der in ständig wiederkehrenden Programmabläufen das Schwingungsabbild mit den gespeicherten Ereignis-Sollwerten vergleicht und im Falle von Abweichungen ein oder mehrere Ausgangssignale erzeugt, die zumindest die Luftventile (7,8) der Luftfeder (4) steuern.

2. Fahrzeugsitz nach Anspruch 1,
dadurch gekennzeichnet,
daß der Schwinghub-Sensor elektrische Analogsignale abgibt und vorzugsweise ein Potentiometer ist.

3. Fahrzeugsitz nach Anspruch 1,
dadurch gekennzeichnet,
daß der Schwinghub-Sensor digitale Wertefolgen abgibt.

4. Fahrzeugsitz nach einem der Ansprüche 1-3,
dadurch gekennzeichnet,
daß die voreingestellten Ereignis-Sollwerte veränderbar sind.

5. Fahrzeugsitz nach einem der vorhergehenden Ansprüche,
dadurch gekennzeichnet,
daß der Prozessor speicherprogrammierbar ist.

6. Fahrzeugsitz nach einem der vorhergehenden Ansprüche,
dadurch gekennzeichnet,
daß der Prozessor das elektrische Schwingungsabbild nach mindestens zwei voreingestellten Ereignis-Sollwerten abfragt und im Falle von Abweichungen über eine Logik-Verknüpfung Ausgangssignale zum Steuern der Luftventile zum Belüften oder Entlüften der Luftfeder und/oder zum Steuern der Zu- oder Abschaltung eines Zusatzluftvolumens und/oder zum Steuern der Zu- oder Abschaltung eines Zusatzstoßdämpfers erzeugt.

7. Fahrzeugsitz nach einem der Ansprüche 1-5,
dadurch gekennzeichnet,
daß der Prozessor mindestens zwei am elektrischen Schwingungsabbild nacheinander abgefragte Ereignis-Istwerte einmal nach der Zeit differenziert und mit einem voreingestellten Geschwindigkeits-Sollwert vergleicht und im Falle von Abweichungen ein abweichungsproportionales Ausgangssignal vorzugsweise zum Steuern eines regelbaren Stoßdämpfers erzeugt.

8. Fahrzeugsitz nach einem der Ansprüche 1-5,
dadurch gekennzeichnet,
daß der Prozessor mindestens zwei am elektrischen Schwingungsabbild nacheinander abgefragte Ereignis-Istwerte zweimal nach der Zeit differenziert und mit einem voreingestellten Beschleunigungs-Sollwert vergleicht und im Falle von Abweichungen ein abweichungsproportionales Ausgangssignal vorzugsweise zum Steuern der Zu- oder Abschaltung und/oder zum Steuern eines regelbaren Zusatzstoßdämpfers erzeugt.

## Claims

1. Vehicle seat
- having a mechical suspension system, which is spring mounted on an air spring (4),
- and using a vertical movement sensor (9) which, during the whole time the seat is in operation, continuously emits an uninterrupted sequence of electrical signals,
- those electrical signals being transmitted to the input of an electronic control device (B) which, in the event of deviations of the input signals form pre-set desired values, generates one or more output signals, which control the air valves (7, 8) for supplying air to, or exhausting air from the air spring,
characterized in that
- the electrical signals of the movement sensor (9) representing an exact electrical position/time image of the movements of the suspension system in real time and analog to the displacements of the suspension system
- this electrical position/time image being transmitted to an input of a micro-processor (11) having stored the pre-set desired values and which, by continuous recurrent programm flows, compares the electrical position/time image with the pre-set desired values and which, in the event of deviations,generates one or more output signals, which control at least the air valves (7, 8) of the air spring (4).

2. Vehicle seat according to claim 1,
characterized in that
the movement sensor emits electrical analog signals and is preferably a potentiometer.

3. Vehicle seat according to claim 1,
characterized in that
the movement sensor emits a sequence of digital values.

4. Vehicle seat according to any one of claim 1 to 3,
characterized in that
the pre-set desired values may be altered.

5. Vehicle seat according to any one of the preceding claims,
characterized in that
the micro-processor is memory-progammable.

6. Vehicle seat according to any one of the preceding claims,
characterized in that
the micro-processor interrogates the electrical position/time image for at least two pre-set desired values and in the case of deviations it generates output signals by means of a logical relationsship operation to control the air valves for supplying air to or exhausting air from the air spring and/or to connect or to disconnect a supplementary air capacity to said air spring and/or to couple or to uncouple a supplementary shock absorber to the suspension system.

7. Vehicle seat according to any one of claims 1 to 5,
characterized in that
the micro-processor differentiates once against the time at least two actual values interrogated successively from the electrical position/time image and compares the result thereof with a pre-set desired velocity value and in the case of deviations it generates deviation-proportional output signals preferably for control of an adjustable shock absorber.

8. Vehicle seat according to any one of claims 1 to 5,
characterized in that
the micro-processor differentiates twice against the time at least two actual values interrogated successively from the electrical position/time image and compares the result thereof with a pre-set desired acceleration value and in case of deviations it generates deviation-proportional output signals preferably to couple or to uncouple and/or to control an adjustable supplementary shock absorber.

## Revendications

1. Siège de véhicule comprenant un système oscillant mécanique qui est suspendu à l'aide d'une suspension pneumatique (4), le système oscillant comportant un capteur d'amplitude de vibrations (9), qui, pendant la mise en service du siège, émet en permanence une suite ininterrompue de signaux électriques qui sont appliqués à l'entrée d'une commande électronique (B), laquelle, en cas d'écart par rapport à des valeurs de consigne d'évènement préréglées, émet un ou plusieurs signaux de sortie qui commandent les valves pneumatiques (7, 8) pour l'alimentation ou l'échappement de l'air comprimé de la suspension pneumatique (4), caractérisé en ce que les signaux électriques du capteur d'amplitude de vibrations (9) constitue une reproduction électrique qui est un tracé exact et simultané des vibrations du système oscillant, et en ce que la reproduction électrique des vibrations est appliquée à une entrée d'un microprocesseur (11) dans lequel sont mis en mémoire les valeurs de consigne d'évènement et qui compare, selon des séquences de programmes se répétant en permanence, la reproduction des vibrations avec les valeurs de consigne d'évènement mises en mémoire et, en cas d'écarts, émet un ou plusieurs signaux de sortie qui commandent au moins les valves pneumatiques (7, 8) de la suspension pneumatique.

2. Siège de véhicule selon la revendication 1, caractérisé en ce que le capteur d'amplitude de vibrations émet des signaux électriques analogiques et est constitué avantageusement par un potentiomètre.

3. Siège de véhicule selon la revendication 1, caractérisé en ce que le capteur d'amplitude de vibrations émet des séries de valeurs numériques.

4. Siège de véhicule selon l'une des revendications 1 à 3, caractérisé en ce que les valeurs de consigne d'évènement préréglées sont susceptibles d'être modifiées.

5. Siège de véhicule selon l'une des revendications précédentes, caractérisé en ce que le processeur est susceptible d'être programmé par des programmes mis en mémoire.

6. Siège de véhicule selon l'une des revendications précédentes, caractérisé en ce que le processeur échantillonne le tracé électrique des vibrations par rapport à au moins deux valeurs de consigne d'évènement préréglées et, en cas d'écarts, émet par l'intermédiaire d'une fonction logique, des signaux de sortie pour commander les valves pneumatiques d'admission et d'échappement d'air comprimé de la suspension pneumatique et/ou pour commander la mise en ou hors service d'un volume supplémentaire et/ou pour commander la mise en ou hors service d'un amortisseur supplémentaire.

7. Siège de véhicule selon l'une des revendications 1 à 5, caractérisé en ce que le processeur procède à la différenciation en fonction du temps d'au moins deux valeurs réelles d'évènement échantillonnées l'une après l'autre sur la reproduction électrique des vibrations et compare le résultat avec une valeur de consigne de vitesse préréglée et, en cas d'écarts, émet un signal de sortie proportionnel à l'écart, de préférence pour commander un amortisseur réglable.

8. Siège de véhicule selon l'une des revendications 1 à 5, caractérisé en ce que le processeur procède à la différenciation deux fois en fonction du temps d'au moins deux valeurs d'évènement échantillonnées l'une après l'autre sur le tracé électrique de vibrations, et compare le résultat avec une valeur de consigne d'accélération préréglée, et, en cas d'écarts, émet un signal de sortie proportionnel à l'écart, de préférence pour commander la mise en ou hors service et/ou pour commander un amortisseur supplémentaire réglable.
